# EUROPEAN PATENT SPECIFICATION

(11) **EP 4 564 212 B1**
(45) Date of publication and mention of the grant of the patent: **15.04.2026**
(21) Application number: 24215699.0
(22) Date of filing: 27.11.2024
(51) Int. Cl.: G06F 21/60

(54) **SYSTEMS, METHODS, AND APPARATUS FOR MEMORY DEVICE WITH DATA SECURITY PROTECTION**
SYSTEME, VERFAHREN UND VORRICHTUNG FÜR EINE SPEICHERVORRICHTUNG MIT DATENSICHERHEITSSCHUTZ
SYSTÈMES, PROCÉDÉS ET APPAREIL POUR DISPOSITIF DE MÉMOIRE AVEC PROTECTION DE SÉCURITÉ DE DONNÉES

(30) Priority: 28.11.2023 US 202363603633 P; 01.11.2024 US 202418935413
(43) Date of publication of application: 04.06.2025
(73) Proprietor: Samsung Electronics Co., Ltd., Suwon-si, Gyeonggi-do 16677 (KR)
(72) Inventor: LI, Zongwang, San Jose, CA, 95134 (US); ZHANG, Da, San Jose, CA, 95134 (US); PEI, Shuyi, San Jose, CA, 95134 (US); PITCHUMANI, Rekha, San Jose, CA, 95134 (US); KI, Yang Seok, San Jose, CA, 95134 (US)
(74) Representative: Kuhnen & Wacker Patent- und Rechtsanwaltsbüro PartG mbB

(56) References cited:
- EP-B1- 3 659 061
- US-A1- 2014 040 637
- US-A1- 2015 089 245
- US-A1- 2019 042 474
- US-A1- 2022 198 027

## Description

### TECHNICAL FIELD

This disclosure relates generally to memory devices, and more specifically to systems, methods, and apparatus for a memory device with data security protection.

### BACKGROUND

Generally, memory media (e.g., cache media) may be used to temporarily store data. To retain the data (e.g., allow for longer storage), the data may be written to storage media. In other words, if a host wants to retain temporarily stored data for longer storage, the data may be written from the memory media to the storage media.

The above information disclosed in this Background section is only for enhancement of understanding of the background of the invention and therefore it may contain information that does not constitute prior art.

US 2015/089245 A1 discloses data storage in persistent memory.

US 2022/198027 A1 discloses storage encryption using a converged cryptographic engine.

US 2014/040637 A1 discloses encrypting data on a primary storage device and on a cache storage device.

### SUMMARY

The invention is set out in the appended set of claims. In some aspects, the techniques described herein relate to a device including at least one circuit including an encryptor and a decryptor; memory media; and storage media, where the encryptor and decryptor are configured between the memory media and storage media; and the at least one circuit is configured to perform one or more operations including receiving at least a portion of data; encrypting, using the encryptor, the at least a portion of data as encrypted data; and storing, to the storage media, the encrypted data. In some aspects, the at least one circuit is further configured to perform one or more operations including receiving, from the storage media, the encrypted data; decrypting, using the decryptor, the encrypted data as decrypted data; and sending the decrypted data. In some aspects, the encryptor is a first encryptor; the decryptor is a first decryptor; the at least a portion of data is first data; the at least one circuit further includes a second encryptor and a second decryptor; and the at least one circuit is further configured to perform one or more operations including receiving second data; encrypting, using the second encryptor, the second data as second encrypted data; and storing, to the memory media, the second encrypted data. In some aspects, the at least one circuit is further configured to perform one or more operations including receiving, from the memory media, second encrypted data; encrypting, using the encryptor, the second encrypted data as third encrypted data; and storing, to the storage media, the third encrypted data. In some aspects, the encryptor is a first encryptor; the encrypted data is first encrypted data; the memory media is configured to receive second encrypted data from a second encryptor; and the first encryptor uses a different encryption algorithm than the second encryptor. In some aspects, the at least one circuit is further configured to perform one or more operations including receiving, from the memory media, the encrypted data; decrypting the encrypted data, using the decryptor, as decrypted data; and sending the decrypted data. In some aspects, the at least one circuit further includes a configuration module; and the at least one circuit is further configured to perform one or more operations including determining an encryption algorithm for the encryptor and decryptor; and applying the encryption algorithm to the at least a portion of data. In some aspects, the at least one circuit is further configured to perform one or more operations including determining that the at least a portion of data should be encrypted; and enabling the encryptor to encrypt the data based on determining that the at least a portion of data should be encrypted. In some aspects, receiving at least a portion of data includes receiving the at least a portion of data during at least one of a flush of cache data or an application flush from device memory to the storage media.

In some aspects, the techniques described herein relate to a method including receiving at least a portion of data, the at least a portion of data being received based on at least one of a flush of cache data and an application flush from device memory to storage media; encrypting the at least a portion of data as encrypted data; and storing, to the storage media, the encrypted data. In some aspects, the method further includes receiving, from the storage media, the encrypted data; decrypting the encrypted data as decrypted data; and sending the decrypted data. In some aspects, the method further includes determining an encryption algorithm; and applying the encryption algorithm to the at least a portion of data. In some aspects, encrypting the at least a portion of data includes encrypting the at least a portion of data using a first encryptor; the at least a portion of data is first data; the encrypted data is first encrypted data; and the method further includes receiving second data; encrypting, using a second encryptor, the second data as second encrypted data; and storing, to memory media, the second encrypted data. In some aspects, encrypting the at least a portion of data includes encrypting the at least a portion of data using a first encryptor; memory media is configured to receive second encrypted data from a second encryptor; and the first encryptor uses a different encryption algorithm than the second encryptor. In some aspects, the method further includes receiving, from the storage media, the encrypted data; decrypting the encrypted data as decrypted data; and sending the decrypted data.

In some aspects, the techniques described herein relate to a system including a host device including device memory; and a memory device including at least one circuit, memory media, storage media, encryptor, and decryptor; and the at least one circuit is configured to perform one or more operations including receiving, from the device memory, at least a portion of data; encrypting, using the encryptor, the at least a portion of data as encrypted data; and storing, to the storage media, the encrypted data. In some aspects, the at least one circuit is further configured to perform one or more operations including receiving, from the storage media, the encrypted data; decrypting, using the decryptor, the encrypted data as decrypted data; and sending, to the device memory, the decrypted data. In some aspects, the encryptor is a first encryptor; the decryptor is a first decryptor; the at least a portion of data is first data; the at least one circuit further includes a second encryptor and a second decryptor; and the at least one circuit is further configured to perform one or more operations including receiving from the device memory, second data; encrypting, using the first encryptor, the second data as second encrypted data; and storing, to the memory media, the second encrypted data. In some aspects, the at least one circuit is further configured to perform one or more operations including receiving, from the memory media, second encrypted data; decrypting, using the decryptor, the second encrypted data as decrypted data; and sending, to the device memory, the decrypted data. In some aspects, encrypting the at least a portion of data includes encrypting the at least a portion of data using a first encryptor; the memory media is configured to receive second encrypted data from a second encryptor; and the first encryptor uses a different encryption algorithm than the second encryptor.

### BRIEF DESCRIPTION OF THE DRAWINGS

The figures are not necessarily drawn to scale and elements of similar structures or functions may generally be represented by like reference numerals or portions thereof for illustrative purposes throughout the figures. The figures are only intended to facilitate the description of the various embodiments described herein. The figures do not describe every aspect of the teachings disclosed herein and do not limit the scope of the claims. To prevent the drawings from becoming obscured, not all of the components, connections, and the like may be shown, and not all of the components may have reference numbers. However, patterns of component configurations may be readily apparent from the drawings. The accompanying drawings, together with the specification, illustrate example embodiments of the present disclosure, and, together with the description, serve to explain the principles of the present disclosure.
FIG. **1** illustrates an embodiment of a memory device scheme in accordance with example embodiments of the disclosure.
FIG. **2** illustrates another embodiment of a memory device scheme in accordance with embodiments of the disclosure.
FIG. **3** illustrates an example operating environment in accordance with embodiments of the disclosure.
FIG. **4** illustrates another example operating environment in accordance with embodiments of the disclosure.
FIG. **5** illustrates a flowchart of a method of securing data in accordance with embodiments of the disclosure.

### DETAILED DESCRIPTION

Generally, memory media (e.g., cache media) may be used to temporarily store data. Cache media may be characterized as volatile media, where the cache media loses its data when power is no longer supplied to the media. For example, when a computing device is shut down (e.g., external power is no longer provided to the cache media), the data in the cache media may not be retained. To preserve the data, the data in the cache media may be written to storage media, which may retain data even when the computing device is shut down (e.g., data remains in the storage media when external power is not being supplied to the storage media).

A host may wish to protect the data from the cache media (e.g., cache data) from unwanted access when the data is retained, e.g., in the storage media. However, in some embodiments, a memory device may not have a way to protect (e.g., encrypt) the cache data when the data is written to the storage media. Various solutions may be provided to encrypt the data on the memory device. For example, in some embodiments, a user-based encryption, e.g., on a host, may be used to encrypt the data. However, user-based encryption may incur large latency overhead when encrypting/decrypting the data (e.g., a central processing unit (CPU) on the host may execute the encryption/decryption operations otherwise preventing it from executing other operations). In some embodiments, a CPU-based technology to encrypt/decrypt the data may be used. However, this solution may also incur latency overhead since all data coming from/going to the memory device may be encrypted. Furthermore, some CPU-based technologies to encrypt/decrypt data may only be configured during the boot process.

According to embodiments of the invention, one or more encryption/decryption engines may be added to the memory device. In some embodiments, data transferred between the cache media and the storage media (e.g., during a flush of cache data, e.g., a global persistent flush (GPF), or when flushing application data) may be encrypted/decrypted. In some embodiments, extra latency overhead for regular load/store operations may not be added between the host and memory device.

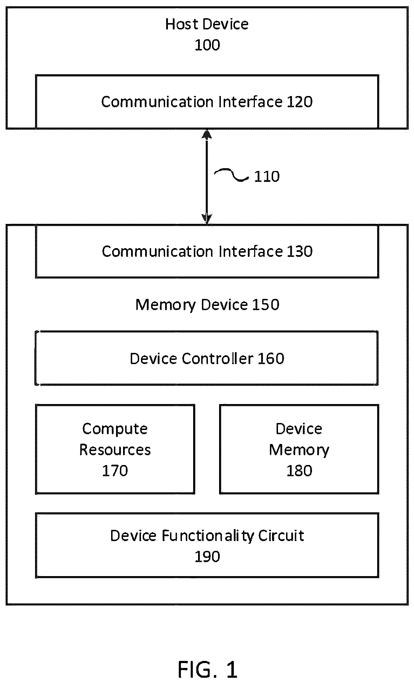

FIG. **1** illustrates an embodiment of a memory device scheme in accordance with example embodiments of the disclosure. The embodiment illustrated in FIG. **1** may include one or more host devices **100** and one or more memory devices **150** configured to communicate using one or more communication connections **110.**

In some embodiments, a host device **100** may be implemented with any component or combination of components that may utilize one or more features of a memory device **150.** For example, a host may be implemented with one or more of a server, a storage node, a compute node, a central processing unit (CPU), a workstation, a personal computer, a tablet computer, a smartphone, and/or the like, or multiples and/or combinations thereof.

In some embodiments, a memory device **150** may include a communication interface **130,** memory **180** (some or all of which may be referred to as device memory), one or more compute resources **170** (which may also be referred to as computational resources), a device controller **160,** and/or a device functionality circuit **190.** In some embodiments, the device controller **160** may control the overall operation of the memory device **150** including any of the operations, features, and/or the like, described herein. For example, in some embodiments, the device controller **160** may parse, process, invoke, and/or the like, commands received from the host devices **100.**

In some embodiments, the device functionality circuit **190** may include any hardware to implement the primary function of the memory device **150.** For example, the device functionality circuit **190** may include storage media such as magnetic media (e.g., if the memory device **150** is implemented as a hard disk drive (HDD) or a tape drive), solid state media (e.g., one or more flash memory devices), optical media, and/or the like. For instance, in some embodiments, a memory device may be implemented at least partially as a solid-state drive (SSD) based on not-AND (NAND) flash memory, persistent memory (PMEM) such as cross-gridded nonvolatile memory, memory with bulk resistance change, phase change memory (PCM), or any combination thereof. In some embodiments, the device controller **160** may include a media translation layer such as a flash translation layer (FTL) for interfacing with one or more flash memory devices. In some embodiments, the memory device **150** may be implemented as a computational storage drive, a computational storage processor (CSP), and/or a computational storage array (CSA).

As another example, if the memory device **150** is implemented as an accelerator, the device functionality circuit **190** may include one or more accelerator circuits, memory circuits, and/or the like.

The compute resources **170** may be implemented with any component or combination of components that may perform operations on data that may be received, stored, and/or generated at the memory device **150.** Examples of compute engines may include combinational logic, sequential logic, timers, counters, registers, state machines, complex programmable logic devices (CPLDs), field programmable gate arrays (FPGAs), application specific integrated circuits (ASICs), embedded processors, microcontrollers, central processing units (CPUs) such as complex instruction set computer (CISC) processors (e.g., x86 processors) and/or a reduced instruction set computer (RISC) processors such as ARM processors, graphics processing units (GPUs), data processing units (DPUs), neural processing units (NPUs), tensor processing units (TPUs), and/or the like, that may execute instructions stored in any type of memory and/or implement any type of execution environment such as a container, a virtual machine, an operating system such as Linux, an Extended Berkeley Packet Filter (eBPF) environment, and/or the like, or a combination thereof.

In some embodiments, the memory **180** may be used, for example, by one or more of the compute resources **170** to store input data, output data (e.g., computation results), intermediate data, transitional data, and/or the like. The memory **180** may be implemented, for example, with volatile memory such as dynamic random-access memory (DRAM), static random-access memory (SRAM), and/or the like, as well as any other type of memory such as nonvolatile memory.

In some embodiments, the memory **180** and/or compute resources **170** may include software, instructions, programs, code, and/or the like, that may be performed, executed, and/or the like, using one or more compute resources (e.g., hardware (HW) resources). Examples may include software implemented in any language such as assembly language, C, C++, and/or the like, binary code, FPGA code, one or more operating systems, kernels, environments such as eBPF, and/or the like. Software, instructions, programs, code, and/or the like, may be stored, for example, in a repository in memory **180** and/or compute resources **170.** In some embodiments, software, instructions, programs, code, and/or the like, may be downloaded, uploaded, sideloaded, preinstalled, built-in, and/or the like, to the memory **180** and/or compute resources **170.** In some embodiments, the memory device **150** may receive one or more instructions, commands, and/or the like, to select, enable, activate, execute, and/or the like, software, instructions, programs, code, and/or the like. Examples of computational operations, functions, and/or the like, that may be implemented by the memory **180,** compute resources **170,** software, instructions, programs, code, and/or the like, may include any type of algorithm, data movement, data management, data selection, filtering, encryption and/or decryption, compression and/or decompression, checksum calculation, hash value calculation, cyclic redundancy check (CRC), weight calculations, activation function calculations, training, inference, classification, regression, and/or the like, for artificial intelligence (AI), machine learning (ML), neural networks, and/or the like.

In some embodiments, a communication interface **120** at a host device **100,** a communication interface **130** at a memory device **150,** and/or a communication connection **110** may implement, and/or be implemented with, one or more interconnects, one or more networks, a network of networks (e.g., the internet), and/or the like, or a combination thereof, using any type of interface, protocol, and/or the like. For example, the communication connection **110,** and/or one or more of the interfaces **120** and/or **130** may implement, and/or be implemented with, any type of wired and/or wireless communication medium, interface, network, interconnect, protocol, and/or the like including Peripheral Component Interconnect Express (PCIe), NVMe, NVMe over Fabric (NVMe-oF), Compute Express Link (CXL), and/or a coherent protocol such as CXL.mem, CXL.cache, CXL.io and/or the like, Gen-Z, Open Coherent Accelerator Processor Interface (OpenCAPI), Cache Coherent Interconnect for Accelerators (CCIX), and/or the like, Advanced eXtensible Interface (AXI), Direct Memory Access (DMA), Remote DMA (RDMA), RDMA over Converged Ethernet (ROCE), Advanced Message Queuing Protocol (AMQP), Ethernet, Transmission Control Protocol/Internet Protocol (TCP/IP), FibreChannel, InfiniBand, Serial ATA (SATA), Small Computer Systems Interface (SCSI), Serial Attached SCSI (SAS), iWARP, any generation of wireless network including 2G, 3G, 4G, 5G, 6G, and/or the like, any generation of Wi-Fi, Bluetooth, near-field communication (NFC), and/or the like, or any combination thereof. In some embodiments, a communication connection **110** may include one or more switches, hubs, nodes, routers, and/or the like.

In some embodiments, a memory device **150** may be implemented in any physical form factor. Examples of form factors may include a 3.5 inch, 2.5 inch, 1.8 inch, and/or the like, memory device (e.g., storage drive) form factor, M.2 device form factor, Enterprise and Data Center Standard Form Factor (EDSFF) (which may include, for example, E1.S, E1.L, E3.S, E3.L, E3.S 2T, E3.L 2T, and/or the like), add-in card (AIC) (e.g., a PCIe card (e.g., PCIe expansion card) form factor including half-height (HH), half-length (HL), half-height, half-length (HHHL), and/or the like), Next-generation Small Form Factor (NGSFF), NF1 form factor, compact flash (CF) form factor, secure digital (SD) card form factor, Personal Computer Memory Card International Association (PCMCIA) device form factor, and/or the like, or a combination thereof. Any of the computational devices disclosed herein may be connected to a system using one or more connectors such as SATA connectors, SCSI connectors, SAS connectors, M.2 connectors, EDSFF connectors (e.g., 1C, 2C, 4C, 4C+, and/or the like), U.2 connectors (which may also be referred to as SSD form factor (SSF) SFF-8639 connectors), U.3 connectors, PCIe connectors (e.g., card edge connectors), and/or the like.

Any of the memory devices disclosed herein may be used in connection with one or more personal computers, smart phones, tablet computers, servers, server chassis, server racks, datarooms, datacenters, edge datacenters, mobile edge datacenters, and/or any combinations thereof.

In some embodiments, a memory device **150** may be implemented with any device that may include, or have access to, memory, storage media, and/or the like, to store data that may be processed by one or more compute resources **170.** Examples may include memory expansion and/or buffer devices such as CXL type 2 and/or CXL type 3 devices, as well as CXL type 1 devices that may include memory, storage media, and/or the like.

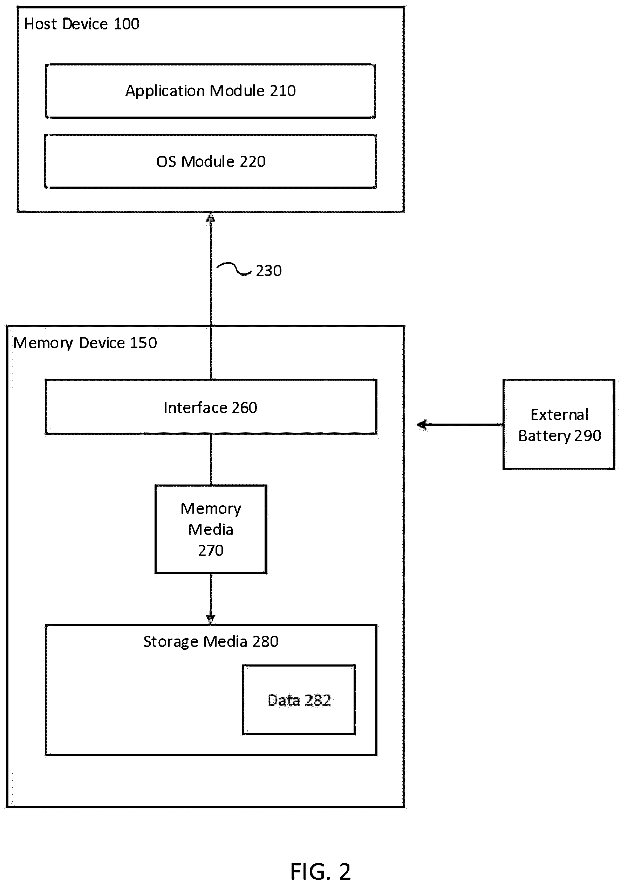

FIG. **2** illustrates another embodiment of a memory device scheme in accordance with example embodiments of the disclosure. The elements illustrated in FIG. **2** may be similar elements to those illustrated in FIG. 1 in which similar elements may be indicated by reference numbers ending in, and/or containing, the same digits, letters, and/or the like. In some embodiments, the host device **100** may include an application module **210** and operating system (OS) module **220;** and the memory device **150** may include an interface **260,** memory media **270** (e.g., cache media), and/or storage media **280.** In some embodiments, the interface **260** may be the interface **120** in FIG. **1** or some other interface that allows the memory device **150** to communicate with the host device **100.** In some embodiments, the interface **260** may be implemented on one or more circuits of the memory device **150.** In some embodiments, the one or more circuits may include one or more FPGAs, ASICs, and/or SOCs.

In some embodiments, the memory media **270** may be relatively fast memory such as DRAM and the storage media **280** may be slower non-volatile memory, such as NAND flash memory. In some embodiments, the memory media **270** may be used as a cache to store frequently accessed data in the faster memory. In some embodiments, the application module **210** may use a memory access request to send/retrieve data from the memory media **270.** For example, in some embodiments, in response to receiving a memory access request, the memory device **150** may check the memory media **270** for data corresponding to the request. In some embodiments, in response to a cache hit (e.g., the data is found on the memory media **270),** the data may be returned from the memory media **270.** In some embodiments, in response to a cache miss (e.g., the data is not found on the memory media **270),** the memory device **150** may copy the data from the storage media **280** to the memory media **270** and return the data from the memory media **270.** In some embodiments, the memory device **150** may be advertised as system memory. In other words, the memory device **150** may appear to the host device **100** as an additional memory node and may be managed by the OS non-uniform memory architecture (NUMA) memory management.

In some embodiments, the OS module **220** may send data to or receive data from the memory device **150.** For example, the OS may use the memory device **150** as expanded memory and/or write cache data to the memory media **270.** For example, when the memory device **150** is configured as expanded memory, the host device **100** may write cache data to local device memory on the host device **100** or on the memory device **150.** In some embodiments, since the memory device **150** may use memory media **270,** with its fast speed, the host device **100** may not experience a lot of latency when accessing the memory media **270** as compared to accessing local device memory. In some embodiments, this may offer the host device **100** additional memory capacity at a lower cost than adding additional device memory to the host device host device **100.**

In some embodiments, the memory device **150** may be coupled to an external battery **290.** In some embodiments, the external battery **290** may supply power to the memory device **150** so that data (such as data **282)** may be retained in the memory media **270** (e.g., memory media **270** may require a power source to retain data).

In some embodiments, the host device **100** may provide additional ways to encrypt data (e.g., a CPU-based encryption scheme may be run from the OS module **220).** For example, the host device **100** may have a way to encrypt data as it is being written to the memory device **150.** However, the CPU may need to run operations to perform the encryption (thereby preventing the CPU from performing other operations). In some embodiments, the host device **100** may run an application to perform encryption. However, this may add additional latency to the operations of the host device **100.**

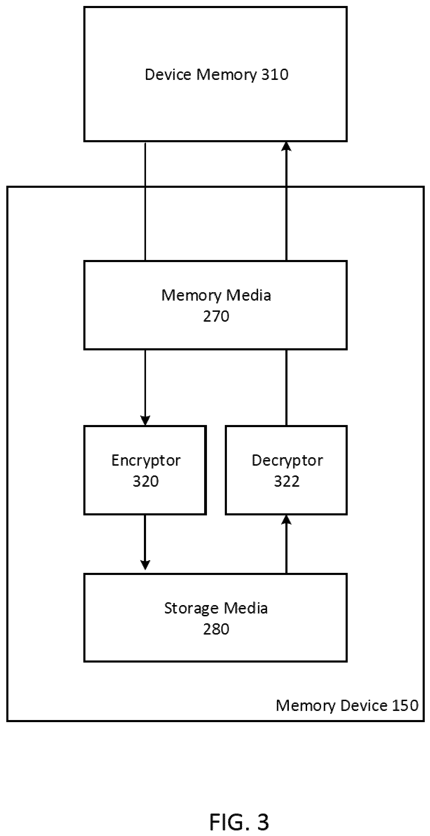

FIG. **3** illustrates an example operating environment in accordance with embodiments of the disclosure. The elements illustrated in FIG. **3** may be similar elements to those illustrated in FIGs. **1** and **2** in which similar elements may be indicated by reference numbers ending in, and/or containing, the same digits, letters, and/or the like. In some embodiments, the memory device **150** may include encryptor **320** and decryptor **322.** In some embodiments, a host device, such as the host device **100,** may include device memory **310.** In some embodiments, the device memory **310** may be on the memory device **150** (e.g., the memory media **270).** In some embodiments, the device memory **310** may store cache data. In some embodiments, as the cache data is written to the storage media **280** (e.g., to retain data when the computing system is powered off), the encryptor **320** may encrypt the data. Thus, in some embodiments, the storage media **280** may store encrypted data. In some embodiments, since the encryptor **320** is on the memory device **150,** the host device may be free to perform other operations. In some embodiments, when the encrypted data is retrieved from the storage media **280,** the data may be decrypted by the decryptor **322.** Thus, the host may not need to decrypt the data when retrieving the data from the storage media **280.**

In some embodiments, the encryptor **320** may be used to encrypt data. For example, data may be received by the encryptor **320** as text. If a host has access to the data, the data may be viewable. In some embodiments, if the encryptor **320** encrypts the data, the data may not be viewable exempt by using, e.g., a key. In some embodiments, if a host attempts to access the encrypted data without a key, the data may not appear in usable format. In some embodiments, the encryptor **320** may be hardware, e.g., on one or more circuit of the memory device **150,** or may be software. In some embodiments, the encryptor **320** may be implemented one or more FPGAs, ASICs, and/or SOCs.

In some embodiments, the decryptor **322** may be used to decrypt data. For example, data may be received by the decryptor **322** as encrypted text. If a host has access to the data, the data may not appear in a usable format. When the data is sent to the decryptor **322,** it may be output as text. In some embodiments, the decryptor **322** may be hardware, e.g., on one or more circuits of the memory device **150,** or may be software. In some embodiments, the decryptor **322** may be implemented one or more FPGAs, ASICs, and/or SOCs.

In some embodiments, the encryptor **320** and/or decryptor **322** may be capable of using various encryption/decryption algorithms. For example, the encryptor **320** and/or decryptor **322** may be configured to use DES (data encryption standard), AES (advanced encryption system), and/or any other algorithm used for encryption/decryption. In some embodiments, an encryption/decryption algorithm may be selected based on security, speed, or any other factor. For example, when writing to the memory media **270,** since the read/write speed may be fast, a faster algorithm may be preferred. Thus, the encryptor **320** may be configured to use a faster algorithm when encrypting cache data. In some embodiments, one encryption/decryption algorithm may be used for a portion of data, and another encryption/decryption algorithm used for a different portion of data. In some embodiments, different encryption/decryption algorithms may be used for the same data. For example, when writing to the memory media **270,** one encryption/decryption algorithm may be used and when writing to the storage media **280,** another encryption/decryption algorithm may be used.

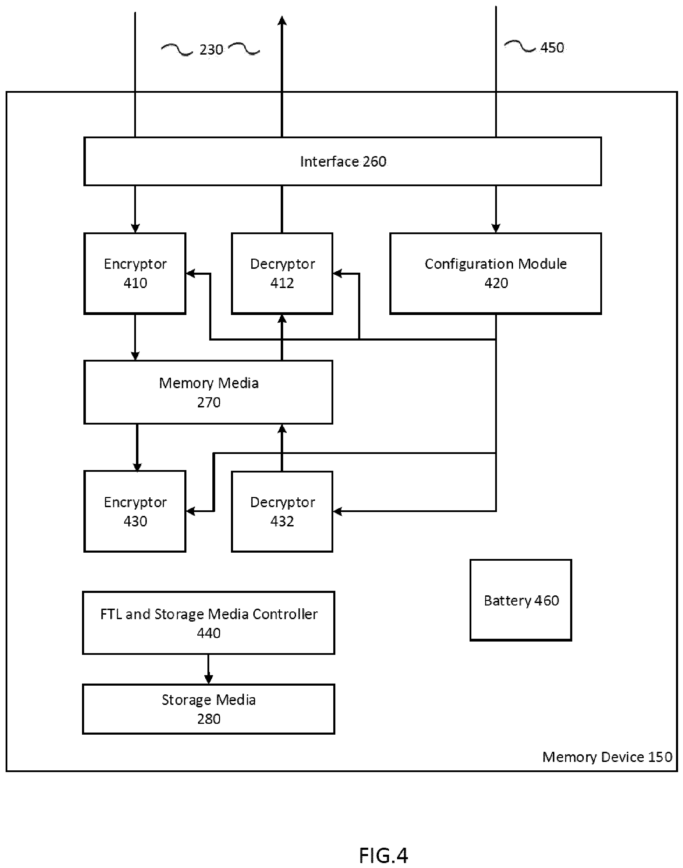

FIG. **4** illustrates another example operating environment in accordance with embodiments of the disclosure. The elements illustrated in FIG. **4** may be similar elements to those illustrated in FIGs. **1****,** **2** and **3** in which similar elements may be indicated by reference numbers ending in, and/or containing, the same digits, letters, and/or the like, memory device **150** may include encryptors **410** and **430,** decryptors **412** and **432,** configuration module **420,** FTL and storage media controller **440,** and/or battery **460.** In some embodiments, the battery **460** may provide power to the storage media **280** so that when external power is no longer provided to the memory device **150,** the storage media **280** may still retain data. In some embodiments, any of the encryptors **410** and **430,** decryptors **412** and **432,** and/or configuration module **420** may be configured on one or more circuits on the memory device **150.** In some embodiments, data received from a host and written to the memory media **270** may be encrypted using the encryptor **410.** In some embodiments, a host may set an encryption algorithm using the configuration module **420.** In some embodiments, the configuration module **420** may use an encryption scheme based on speed versus security considerations. For example, for data that may be less secure, the host may select an encryption scheme with fast performance. If the host would like more security, in some embodiments, the host may select an encryption scheme with greater security but may not perform as fast as a fast encryption scheme. In some embodiments, since the encryption is performed by the memory device **150,** the host may not need to use computing resources to encrypt the data, thus saving computing resources on the host. Furthermore, since the memory device **150** may perform the encryption independent of operations from the host, the latency may be minimized.

In some embodiments, when data is read from the memory media **270,** the memory device **150** may use the decryptor **412** to decrypt the data before sending it to the host. The encryptor **410** and decryptor **412** may use the same encryption scheme as set by the configuration module **420.** In some embodiments, the encryption scheme may be set for a session. For example, for a given session, the encryptor **410** and decryptor **412** may use the same encryption scheme. Thus, additional information may not be necessary for the decryptor **412** to know what encryption scheme was used to encrypt the data. In some embodiments, the configuration module **420** may keep track of what encryption scheme was used for which data and supply that information to the decryptor **412** to decrypt the data. In some embodiments, the data may have an indicator indicating the encryption scheme so that the decryptor **412** may know how to decrypt the data.

In some embodiments, data written to the storage media **280** may be encrypted using the encryptor **430.** In some embodiments, the memory device **150** may distinguish operations where the memory device **150** may be used as expanded memory, and operation where the memory device **150** may be used to store data. In some embodiments, only data transferred between the device local memory and the storage media **280** (e.g., during a flush of cache data, e.g., global persistent flush (GPF) data dump, or when flushing application data to the persistent domain) may be encrypted. For example, when data is written to the memory device **150,** the data may not be written to the storage media **280** and instead stored in the memory media **270.** In some embodiments, when a power loss to the system occurs, some of the data in the local memory and the memory media **270** may be written to the storage media **280** to preserve the data. In some embodiments, the host and/or memory device **150** may perform the transfer of data to the storage media **280** even during a power loss.

In some embodiments, when data is read from the storage media, the data may be decrypted using the decryptor **432.** For example, the configuration module **420** may indicate to the decryptor **432** an encryption algorithm to use to decrypt the data. The decrypted data may be sent to a host. For example, if a host wishes to resume operation, e.g., after a shut down, it may not be able to resume where it left off if the data in the device memory is not retained. By storing the data in the memory device, the host may resume operation when the data is stored on the memory device. When the data is being stored, encrypting the data may secure the data so that other hosts and/or unwanted actors may not have access to the data on the memory device.

In some embodiments, the data may be encrypted when being written to the memory media **270** and when being written to the storage media **280.** In some embodiments data may be encrypted only when being written to the storage media **280.** In some embodiments, the encryptor **410** and encryptor **430** may use different encryption schemes.

In some embodiments, the configuration module **420** may be configurable by the host. In some embodiments, the host may select an algorithm for the encryptor **410** and decryptor **412,** and/or the encryptor **430** and decryptor **432.** For example, during the data backup stage during flushing of cache data or an application flushing data to the storage media **280,** the encryptor **410** and/or encryptor **430** may encrypt the data using an encryption algorithm, such as Advanced Encryption Standard (AES). It should be understood that any encryption algorithm may be used and future encryption algorithms may be added as needed. In some embodiments, the encryptor **410** and encryptor **430** may use different encryption schemes. For example, since the memory media **270** may be relatively fast, the host may choose an encryption scheme that minimizes latency, such as a lightweight encryption scheme. In some embodiments, since the storage media **280** may be slower than the memory media **270,** the host may choose a stronger encryption scheme. In some embodiments, the host may be able to enable/disable the encryptor **410** and decryptor **412,** and/or the encryptor **430** and decryptor **432.** For example, the host may determine that it does not want increased latency from encrypting to the memory media **270** and may disable encrypting/decryption from the encryptor **410** and decryptor **412.** This determination may be performed on a process basis, application basis, duration basis, or any other basis that allows the host to distinguish which data it may determine the encrypt and decrypt.

In some embodiments, the configuration module **420** may use a different memory access protocol **450** (e.g., CXL.io) than the memory access protocol **230** (e.g., CXL.mem) used to communicate with the memory media **270** and storage media **280.** For example, the memory access protocol **230** may be used for load/store commands to the memory device **150,** and the memory access protocol **450** may be used for configuration commands among others.

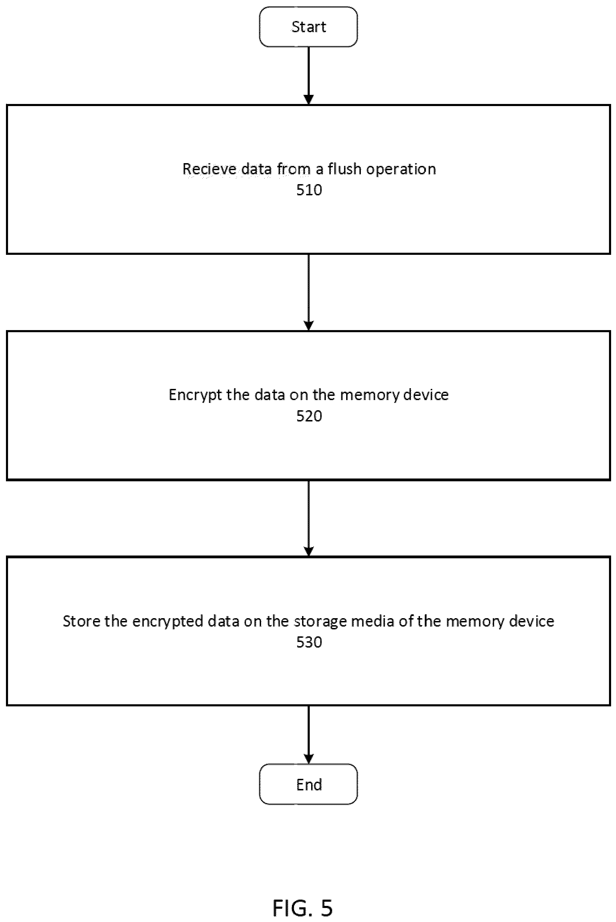

FIG. **5** illustrates a flowchart of a method of securing data in accordance with embodiments of the disclosure. The following description may be applied to the memory device **150** in FIGs. **1-4****.** Where there are differences, the descriptions will identify which figure the description is applied.

At **510,** data may be received from a flush operation. For example, storage media, such as the storage media **280,** may receive data, e.g., from a host. In some embodiments, the data from may be received from the device memory of the host. In some embodiments, the host may use the memory media **270** on the memory device **150,** and pass the data to the storage media **280.** In some embodiments, data may be received from a global persistent flush (GPF) and/or an application flush from the device memory to the storage media **280.**

At **520,** the data may be encrypted on the memory device. For example, the configuration module **420** may be set to encrypt data from the device memory and may set an encryption algorithm to use for an encryptor. As data is coming from the host and/or memory media, the encryptor may apply the encryption algorithm to the data. In some embodiments, the encryption algorithm may be per process, per operation, or any other way to separate the data received by the memory device. For example, if the memory device is attached to multiple virtual machines, each virtual machine may use its own encryption algorithm. In some embodiments, the configuration module **420** may identify the data being written and determine whether to encrypt the data and/or which encryption algorithm to apply to the data. In some embodiments, the encryption may be performed independently of the host operations, and thus latency may not be incurred (e.g., the host may not allocate processes to encrypt/decrypt the data and the data may be encrypted/decrypted on the memory device).

At **530,** the encrypted data may be stored on the storage media on the memory device. Since the data may be encrypted, the data is protected from access from other hosts or other unwanted access. Furthermore, since the configuration module may keep track of the encryption algorithm, the data may be decrypted when returned to the host.

This disclosure encompasses numerous aspects relating to devices with memory and storage configurations. The aspects disclosed herein may have independent utility and may be embodied individually, and not every embodiment may utilize every aspect. Moreover, the aspects may also be embodied in various combinations, some of which may amplify some benefits of the individual aspects in a synergistic manner.

In some embodiments, cache media may be accessed by software using load and/or store instructions, whereas storage media may be accessed by software using read and/or write instructions.

In some embodiments, cache media may be accessed using a memory interface and/or protocol such as double data rate (DDR) of any generation (e.g., DDR4, DDR5, etc.), DMA, RDMA, Open Memory Interface (OMI), CXL, Gen-Z, and/or the like, whereas storage media may be accessed using a storage interface and/or protocol such as serial ATA (SATA), Small Computer System Interface (SCSI), serial attached SCSI (SAS), NVMe, NVMe-oF, and/or the like.

Although some embodiments may be described in the context of cache media that may be implemented with cache media such as DRAM, in other embodiments, other types of media, e.g., storage media, may be used for cache media. For example, in some embodiments, some or all of the memory media **270** may be implemented with media other than cache media that may have one or more relative characteristics (e.g., relative to the storage media **280)** that may make one or both of them more suitable for their respective functions. For instance, in some embodiments, the storage media **280** may have a relatively higher capacity, lower cost, and/or the like, whereas some or all of the memory media **270** may have relatively lower access latency that may make it relatively more suitable for use as a cache.

Memory device **150** as well as any other devices disclosed herein may be used in connection with one or more personal computers, smart phones, tablet computers, servers, server chassis, server racks, datarooms, datacenters, edge datacenters, mobile edge datacenters, and/or any combinations thereof.

Any of the functionality described herein, including any of the user functionality, device functionally, and/or the like (e.g., any of the control logic) may be implemented with hardware, software, firmware, or any combination thereof including, for example, hardware and/or software combinational logic, sequential logic, timers, counters, registers, state machines, volatile memories such DRAM and/or SRAM, nonvolatile memory including flash memory, persistent memory such as cross-gridded nonvolatile memory, memory with bulk resistance change, PCM, and/or the like and/or any combination thereof, complex programmable logic devices (CPLDs), FPGAs, ASICs, central processing units (CPUs) including CISC processors such as x86 processors and/or RISC processors such as ARM processors, graphics processing units (GPUs), neural processing units (NPUs), tensor processing units (TPUs), data processing units (DPUs), and/or the like, executing instructions stored in any type of memory. In some embodiments, one or more components may be implemented as a system on a chip (SoC).

Some embodiments disclosed above have been described in the context of various implementation details such as devices implemented as memory devices that may use specific interfaces, protocols, and/or the like, but the principles of this disclosure are not limited to these or any other specific details. For example, some functionality has been described as being implemented by certain components, but in other embodiments, the functionality may be distributed between different systems and components in different locations and having various user interfaces. Certain embodiments have been described as having specific processes, operations, etc., but these terms also encompass embodiments in which a specific process, operation, etc. may be implemented with multiple processes, operations, etc., or in which multiple processes, operations, etc. may be integrated into a single process, step, etc. A reference to a component or element may refer to only a portion of the component or element. For example, a reference to a block may refer to the entire block or one or more subblocks. The use of terms such as "first" and "second" in this disclosure and the claims may only be for purposes of distinguishing the elements they modify and may not indicate any spatial or temporal order unless apparent otherwise from context. In some embodiments, a reference to an element may refer to at least a portion of the element, for example, "based on" may refer to "based at least in part on," and/or the like. A reference to a first element may not imply the existence of a second element. The principles disclosed herein have independent utility and may be embodied individually, and not every embodiment may utilize every principle. However, the principles may also be embodied in various combinations, some of which may amplify the benefits of the individual principles in a synergistic manner. The various details and embodiments described above may be combined to produce additional embodiments according to the inventive principles of this patent disclosure.

In some embodiments, a portion of an element may refer to less than, or all of, the element. A first portion of an element and a second portion of the element may refer to the same portions of the element. A first portion of an element and a second portion of the element may overlap (e.g., a portion of the first portion may be the same as a portion of the second portion).

In the embodiments described herein, the operations are example operations, and may involve various additional operations not explicitly illustrated. In some embodiments, some of the illustrated operations may be omitted. In some embodiments, one or more of the operations may be performed by components other than those illustrated herein. Additionally, in some embodiments, the temporal order of the operations may be varied. Moreover, the figures are not necessarily drawn to scale.

The principles disclosed herein may have independent utility and may be embodied individually, and not every embodiment may utilize every principle. However, the principles may also be embodied in various combinations, some of which may amplify the benefits of the individual principles in a synergistic manner.

In some embodiments, the latency of a memory device may refer to the delay between a memory device and the processor in accessing memory. Furthermore, latency may include delays caused by hardware such as the read-write speeds to access a memory device, and/or the structure of an arrayed memory device producing individual delays in reaching the individual elements of the array. For example, a first memory device in the form of DRAM may have a faster read/write speed than a second memory device in the form of a NAND device. Furthermore, the latency of a memory device may change over time based on conditions such as the relative network load, as well as performance of the memory device over time, and environmental factors such as changing temperature influencing delays on the signal path.

Although some example embodiments may be described in the context of specific implementation details such as a processing system that may implement a NUMA architecture, memory devices, and/or pools that may be connected to a processing system using an interconnect interface and/or protocol CXL, and/or the like, the principles are not limited to these example details and may be implemented using any other type of system architecture, interfaces, protocols, and/or the like. For example, in some embodiments, one or more memory devices may be connected using any type of interface and/or protocol including Peripheral Component Interconnect Express (PCIe), Nonvolatile Memory Express (NVMe), NVMe-over-fabric (NVMe oF), Advanced eXtensible Interface (AXI), Ultra Path Interconnect (UPI), Ethernet, Transmission Control Protocol/Internet Protocol (TCP/IP), remote direct memory access (RDMA), RDMA over Converged Ethernet (ROCE), FibreChannel, InfiniBand, Serial ATA (SATA), Small Computer Systems Interface (SCSI), Serial Attached SCSI (SAS), iWARP, and/or the like, or any combination thereof. In some embodiments, an interconnect interface may be implemented with one or more memory semantic and/or memory coherent interfaces and/or protocols including one or more CXL protocols such as CXL.mem, CXL.io, and/or CXL.cache, Gen-Z, Coherent Accelerator Processor Interface (CAPI), Cache Coherent Interconnect for Accelerators (CCIX), and/or the like, or any combination thereof. Any of the memory devices may be implemented with one or more of any type of memory device interface including DDR, DDR2, DDR3, DDR4, DDR5, LPDDRX, Open Memory Interface (OMI), NVLink, High Bandwidth Memory (HBM), HBM2, HBM3, and/or the like.

In some embodiments, any of the memory devices, memory pools, hosts, and/or the like, or components thereof, may be implemented in any physical and/or electrical configuration and/or form factor such as a free-standing apparatus, an add-in card such as a PCIe adapter or expansion card, a plug-in device, for example, that may plug into a connector and/or slot of a server chassis (e.g., a connector on a backplane and/or a midplane of a server or other apparatus), and/or the like. In some embodiments, any of the memory devices, memory pools, hosts, and/or the like, or components thereof, may be implemented in a form factor for a memory device such as 3.5 inch, 2.5 inch, 1.8 inch, M.2, Enterprise and Data Center SSD Form Factor (EDSFF), NF1, and/or the like, using any connector configuration for the interconnect interface such as a SATA connector, SCSI connector, SAS connector, M.2 connector, U.2 connector, U.3 connector, and/or the like. Any of the devices disclosed herein may be implemented entirely or partially with, and/or used in connection with, a server chassis, server rack, dataroom, datacenter, edge datacenter, mobile edge datacenter, and/or any combinations thereof. In some embodiments, any of the memory devices, memory pools, hosts, and/or the like, or components thereof, may be implemented as a CXL Type-1 device, a CXL Type-2 device, a CXL Type-3 device, and/or the like.

In some embodiments, any of the functionality described herein, including, for example, any of the logic to implement tiering, device selection, and/or the like, may be implemented with hardware, software, or a combination thereof including combinational logic, sequential logic, one or more timers, counters, registers, and/or state machines, one or more CPLD, FPGA, ASICs, CPU such as CISC processors such as x86 processors and/or RISC processors such as ARM processors, GPUs, NPUs, TPUs and/or the like, executing instructions stored in any type of memory, or any combination thereof. In some embodiments, one or more components may be implemented as a system-on-chip (SOC).

In this disclosure, numerous specific details are set forth in order to provide a thorough understanding of the disclosure, but the disclosed aspects may be practiced without these specific details. In other instances, well-known methods, procedures, components, and circuits have not been described in detail to not obscure the subject matter disclosed herein.

Reference throughout this specification to "one embodiment" or "an embodiment" means that a particular feature, structure, or characteristic described in connection with the embodiment may be included in at least one embodiment disclosed herein. Thus, the appearances of the phrases "in one embodiment" or "in an embodiment" or "according to one embodiment" (or other phrases having similar import) in various places throughout this specification may not necessarily all be referring to the same embodiment. Furthermore, the particular features, structures or characteristics may be combined in any suitable manner in one or more embodiments. In this regard, as used herein, the word "exemplary" means "serving as an example, instance, or illustration." Any embodiment described herein as "exemplary" is not to be construed as necessarily preferred or advantageous over other embodiments. Additionally, the particular features, structures, or characteristics may be combined in any suitable manner in one or more embodiments. Also, depending on the context of discussion herein, a singular term may include the corresponding plural forms and a plural term may include the corresponding singular form. Similarly, a hyphenated term (e.g., "two-dimensional," "pre-determined," "pixel-specific," etc.) may be occasionally interchangeably used with a corresponding non-hyphenated version (e.g., "two dimensional," "predetermined," "pixel specific," etc.), and a capitalized entry (e.g., "Counter Clock," "Row Select," "PIXOUT," etc.) may be interchangeably used with a corresponding non-capitalized version (e.g., "counter clock," "row select," "pixout," etc.). Such occasional interchangeable uses shall not be considered inconsistent with each other.

Also, depending on the context of discussion herein, a singular term may include the corresponding plural forms and a plural term may include the corresponding singular form. It is further noted that various figures (including component diagrams) shown and discussed herein are for illustrative purpose only, and are not drawn to scale. For example, the dimensions of some of the elements may be exaggerated relative to other elements for clarity. Further, if considered appropriate, reference numerals have been repeated among the figures to indicate corresponding and/or analogous elements.

The terminology used herein is for the purpose of describing some example embodiments only and is not intended to be limiting of the claimed subject matter. As used herein, the singular forms "a," "an" and "the" are intended to include the plural forms as well, unless the context clearly indicates otherwise. The terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

When an element or layer is referred to as being on, "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numerals refer to like elements throughout. As used herein, the term "and/or" may include any and all combinations of one or more of the associated listed items.

The terms "first," "second," etc., as used herein, are used as labels for nouns that they precede, and do not imply any type of ordering (e.g., spatial, temporal, logical, etc.) unless explicitly defined as such. Furthermore, the same reference numerals may be used across two or more figures to refer to parts, components, blocks, circuits, units, or modules having the same or similar functionality. Such usage is, however, for simplicity of illustration and ease of discussion only; it does not imply that the construction or architectural details of such components or units are the same across all embodiments or such commonly-referenced parts/modules are the only way to implement some of the example embodiments disclosed herein.

The term "module" may refer to any combination of software, firmware and/or hardware configured to provide the functionality described herein in connection with a module. For example, software may be embodied as a software package, code and/or instruction set or instructions, and the term "hardware," as used in any implementation described herein, may include, for example, singly or in any combination, an assembly, hardwired circuitry, programmable circuitry, state machine circuitry, and/or firmware that stores instructions executed by programmable circuitry. The modules may, collectively or individually, be embodied as circuitry that forms part of a larger system, for example, but not limited to, an integrated circuit (IC), system-on-a-chip (SoC), an assembly, and so forth. Embodiments of the subject matter and the operations described in this specification may be implemented in digital electronic circuitry, or in computer software, firmware, or hardware, including the structures disclosed in this specification and their structural equivalents, or in combinations of one or more of them. Embodiments of the subject matter described in this specification may be implemented as one or more computer programs, e.g., one or more modules of computer-program instructions, encoded on computer-storage medium for execution by, or to control the operation of data-processing apparatus. Alternatively or additionally, the program instructions can be encoded on an artificially generated propagated signal, e.g., a machine-generated electrical, optical, or electromagnetic signal, which is generated to encode information for transmission to suitable receiver apparatus for execution by a data processing apparatus. A computer-storage medium can be, or be included in, a computer-readable memory device, a computer-readable storage substrate, a random or serial-access memory array or device, or a combination thereof. Moreover, while a computer-storage medium is not a propagated signal, a computer-storage medium may be a source or destination of computer-program instructions encoded in an artificially generated propagated signal. The computer-storage medium can also be, or be included in, one or more separate physical components or media (e.g., multiple CDs, disks, or other memory devices). Additionally, the operations described in this specification may be implemented as operations performed by a data-processing apparatus on data stored on one or more computer-readable memory devices or received from other sources.

While this specification may contain many specific implementation details, the implementation details should not be construed as limitations on the scope of any claimed subject matter, but rather be construed as descriptions of features specific to particular embodiments. Certain features that are described in this specification in the context of separate embodiments may also be implemented in combination in a single embodiment. Conversely, various features that are described in the context of a single embodiment may also be implemented in multiple embodiments separately or in any suitable subcombination. Moreover, although features may be described above as acting in certain combinations and even initially claimed as such, one or more features from a claimed combination may in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described herein. Other embodiments are within the scope of the following claims. In some cases, the actions set forth in the claims may be performed in a different order and still achieve desirable results. Additionally, the processes depicted in the accompanying figures do not necessarily require the particular order shown, or sequential order, to achieve desirable results. In certain implementations, multitasking and parallel processing may be advantageous.

While certain exemplary embodiments have been described and shown in the accompanying drawings, it should be understood that such embodiments merely illustrative, and the scope of this disclosure is not limited to the embodiments described or illustrated herein. The invention may be modified in arrangement and detail without departing from the inventive concepts, and such changes and modifications are considered to fall within the scope of the following claims.

## Claims

1. A device (150) comprising:
at least one circuit comprising an encryptor (320) and a decryptor (322);
memory media (270); and
storage media (280), wherein the encryptor (320) and decryptor (322) are configured between the memory media (270) and storage media (280);
wherein the at least one circuit is configured to perform one or more operations comprising:
receiving at least a portion of data;
encrypting, using the encryptor (320), the at least a portion of data as encrypted data; and
storing, to the storage media (280), the encrypted data,
wherein the encryptor (320) is a first encryptor;
wherein the encrypted data is first encrypted data;
wherein the memory media (270) is configured to receive second encrypted data from a second encryptor;
wherein the first encryptor uses a different encryption algorithm than the second encryptor;
wherein an encryption algorithm used by the second encryptor comprises a lightweight encryption scheme that minimizes latency;
wherein an encryption algorithm used by the first encryptor comprises a stronger encryption scheme compared to the algorithm used by the second encryptor;
wherein the first encryptor is a first hardware encryptor; and
wherein the second encryptor is a second hardware encryptor separate from the first hardware encryptor.

2. The device (150) of claim 1, wherein the at least one circuit is further configured to perform one or more operations comprising:
receiving, from the storage media (280), the encrypted data;
decrypting, using the decryptor (322), the encrypted data as decrypted data; and
sending the decrypted data.

3. The device (150) of claim 1 or 2,
wherein the encryptor (320) is a first encryptor;
wherein the decryptor (322) is a first decryptor;
wherein the at least a portion of data is first data;
wherein the at least one circuit further comprises a second encryptor and a second decryptor; and
wherein the at least one circuit is further configured to perform one or more operations comprising:
receiving second data;
encrypting, using the second encryptor, the second data as second encrypted data; and
storing, to the memory media (270), the second encrypted data.

4. The device (150) of claim 1 or 2,
wherein the at least one circuit is further configured to perform one or more operations comprising:
receiving, from the memory media (270), second encrypted data;
encrypting, using the encryptor (320), the second encrypted data as third encrypted data; and
storing, to the storage media (280), the third encrypted data.

5. The device (150) of claim 1,
wherein the at least one circuit is further configured to perform one or more operations comprising:
receiving, from the memory media (270), the encrypted data;
decrypting the encrypted data, using the decryptor (322), as decrypted data; and
sending the decrypted data.

6. The device (150) of any one of claims 1 to 5,
wherein the at least one circuit further comprises a configuration module (420); and
wherein the at least one circuit is further configured to perform one or more operations comprising:
determining an encryption algorithm for the encryptor (320) and decryptor (322); and
applying the encryption algorithm to the at least a portion of data.

7. The device (150) of claim 6,
wherein the at least one circuit is further configured to perform one or more operations comprising:
determining that the at least a portion of data should be encrypted; and
enabling the encryptor (320) to encrypt the data based on determining that the at least a portion of data should be encrypted.

8. The device (150) of any one of claims 1 to 7, wherein receiving at least a portion of data comprises:
receiving the at least a portion of data during at least one of a flush of cache data or an application flush from device (150) memory to the storage media (280).

9. A method comprising:
receiving at least a portion of data, the at least a portion of data being received based on at least one of a flush of cache data and an application flush from device (150) memory to storage media (280);
encrypting the at least a portion of data as encrypted data; and
storing, to the storage media (280), the encrypted data,
wherein encrypting the at least a portion of data comprises encrypting the at least a portion of data using a first encryptor;
wherein memory media (270) is configured to receive second encrypted data from a second encryptor;
wherein the first encryptor uses a different encryption algorithm than the second encryptor;
wherein an encryption algorithm used by the second encryptor comprises a lightweight encryption scheme that minimizes latency;
wherein an encryption algorithm used by the first encryptor comprises a stronger encryption scheme compared to the algorithm used by the second encryptor;
wherein the first encryptor is a first hardware encryptor; and
wherein the second encryptor is a second hardware encryptor separate from the first hardware encryptor.

10. The method of claim 9, further comprising:
receiving, from the storage media (280), the encrypted data;
decrypting the encrypted data as decrypted data; and
sending the decrypted data.

11. The method of claim 9 or 10, further comprising:
determining an encryption algorithm; and
applying the encryption algorithm to the at least a portion of data.

12. The method of any one of claims 9 to 11,
wherein encrypting the at least a portion of data comprises encrypting the at least a portion of data using a first encryptor;
wherein the at least a portion of data is first data;
wherein the encrypted data is first encrypted data; and
wherein the method further comprises:
receiving second data;
encrypting, using a second encryptor, the second data as second encrypted data; and
storing, to memory media (270), the second encrypted data.

13. The method of claim 9, further comprising:
receiving, from the memory media (270), the encrypted data;
decrypting the encrypted data as decrypted data; and
sending the decrypted data.

## Patentansprüche

1. Eine Vorrichtung (150), umfassend:
mindestens eine Schaltung, die einen Verschlüsseler (320) und einen Entschlüsseler (322) umfasst;
ein Speichermedium (270); und
ein Speichermedium (280), wobei der Verschlüsseler (320) und der Entschlüsseler (322) zwischen dem Speichermedium (270) und dem Speichermedium (280) angeordnet sind;
wobei die mindestens eine Schaltung derart konfiguriert ist, dass sie einen oder mehrere Vorgänge ausführt, die Folgendes umfassen:
Empfangen mindestens eines Teils von Daten;
Verschlüsseln des mindestens einen Teils der Daten als verschlüsselte Daten unter Verwendung des Verschlüsselers (320); und
Speichern der verschlüsselten Daten auf dem Speichermedium (280),
wobei der Verschlüsseler (320) ein erster Verschlüsseler ist;
wobei die verschlüsselten Daten erste verschlüsselte Daten sind;
wobei das Speichermedium (270) derart konfiguriert ist, dass es zweite verschlüsselte Daten von einem zweiten Verschlüsseler empfängt;
wobei der erste Verschlüsseler einen anderen Verschlüsselungsalgorithmus als der zweite Verschlüsseler verwendet;
wobei ein vom zweiten Verschlüsseler verwendeter Verschlüsselungsalgorithmus ein leichtgewichtiges Verschlüsselungsschema umfasst, das die Latenz minimiert;
wobei ein vom ersten Verschlüsseler verwendeter Verschlüsselungsalgorithmus ein stärkeres Verschlüsselungsschema umfasst als der vom zweiten Verschlüsseler verwendete Algorithmus;
wobei der erste Verschlüsseler ein erster Hardware-Verschlüsseler ist; und
wobei der zweite Verschlüsseler ein zweiter Hardware-Verschlüsseler ist, der vom ersten Hardware-Verschlüsseler getrennt ist.

2. Die Vorrichtung (150) nach Anspruch 1, wobei die mindestens eine Schaltung ferner derart konfiguriert ist, dass sie einen oder mehrere Vorgänge ausführt, welche umfassen:
Empfangen der verschlüsselten Daten von dem Speichermedium (280);
Entschlüsseln der verschlüsselten Daten unter Verwendung des Entschlüsselers (322) als entschlüsselte Daten; und
Senden der entschlüsselten Daten.

3. Die Vorrichtung (150) nach Anspruch 1 oder 2,
wobei der Verschlüsseler (320) ein erster Verschlüsseler ist;
wobei der Entschlüsseler (322) ein erster Entschlüsseler ist;
wobei der mindestens eine Teil der Daten erste Daten sind;
wobei die mindestens eine Schaltung ferner einen zweiten Verschlüsseler und einen zweiten Entschlüsseler umfasst; und
wobei die mindestens eine Schaltung ferner derart konfiguriert ist, dass sie einen oder mehrere Vorgänge ausführt, welche umfassen:
Empfangen von zweiten Daten;
Verschlüsseln der zweiten Daten unter Verwendung des zweiten Verschlüsselers als zweite verschlüsselte Daten; und
Speichern der zweiten verschlüsselten Daten auf dem Speichermedium (270).

4. Die Vorrichtung (150) nach Anspruch 1 oder 2,
wobei die mindestens eine Schaltung ferner derart konfiguriert ist, dass sie einen oder mehrere Vorgänge ausführt, welche umfassen:
Empfangen von zweiten verschlüsselten Daten von dem Speichermedium (270);
Verschlüsseln der zweiten verschlüsselten Daten unter Verwendung des Verschlüsselers (320) als dritte verschlüsselte Daten; und
Speichern der dritten verschlüsselten Daten auf dem Speichermedium (280).

5. Die Vorrichtung (150) nach Anspruch 1,
wobei die mindestens eine Schaltung ferner derart konfiguriert ist, dass sie einen oder mehrere Vorgänge ausführt, welche umfassen:
Empfangen der verschlüsselten Daten von dem Speichermedium (270);
Entschlüsseln der verschlüsselten Daten unter Verwendung des Entschlüsselers (322) als entschlüsselte Daten; und
Senden der entschlüsselten Daten.

6. Die Vorrichtung (150) nach einem der Ansprüche 1 bis 5,
wobei die mindestens eine Schaltung ferner ein Konfigurationsmodul (420) umfasst; und
wobei die mindestens eine Schaltung ferner derart konfiguriert ist, dass sie einen oder mehrere Vorgänge ausführt, welche umfassen:
Bestimmen eines Verschlüsselungsalgorithmus für den Verschlüsseler (320) und den Entschlüsseler (322); und
Anwenden des Verschlüsselungsalgorithmus auf mindestens einen Teil der Daten.

7. Die Vorrichtung (150) nach Anspruch 6,
wobei die mindestens eine Schaltung ferner derart konfiguriert ist, dass sie einen oder mehrere Vorgänge ausführt, welche umfassen:
Feststellen, dass mindestens ein Teil der Daten verschlüsselt werden sollte; und
Aktivieren des Verschlüsselungsmoduls (320), um die Daten auf der Grundlage der Feststellung zu verschlüsseln, dass mindestens ein Teil der Daten verschlüsselt werden sollte.

8. Die Vorrichtung (150) nach einem der Ansprüche 1 bis 7, wobei das Empfangen mindestens eines Teils der Daten umfasst:
Empfangen des mindestens einen Teils der Daten während mindestens einem von einem Cache-Daten-Flush oder einem Anwendungs-Flush vom Speicher der Vorrichtung (150) auf das Speichermedium (280).

9. Ein Verfahren, umfassend:
Empfangen mindestens eines Teils der Daten, wobei der mindestens eine Teil der Daten auf der Grundlage mindestens eines Cache-Daten-Flushs oder eines Anwendungs-Flushs vom Speicher der Vorrichtung (150) auf ein Speichermedium (280) empfangen wird;
Verschlüsseln des mindestens einen Teils der Daten als verschlüsselte Daten; und
Speichern der verschlüsselten Daten auf dem Speichermedium (280),
wobei das Verschlüsseln des mindestens einen Teils der Daten das Verschlüsseln des mindestens einen Teils der Daten unter Verwendung eines ersten Verschlüsselers umfasst;
wobei das Speichermedium (270) derart konfiguriert ist, dass es zweite verschlüsselte Daten von einem zweiten Verschlüsseler empfängt;
wobei der erste Verschlüsseler einen anderen Verschlüsselungsalgorithmus als der zweite Verschlüsseler verwendet;
wobei ein vom zweiten Verschlüsseler verwendeter Verschlüsselungsalgorithmus ein leichtgewichtiges Verschlüsselungsschema umfasst, das die Latenz minimiert;
wobei ein vom ersten Verschlüsseler verwendeter Verschlüsselungsalgorithmus ein im Vergleich zum vom zweiten Verschlüsseler verwendeten Algorithmus stärkeres Verschlüsselungsschema umfasst;
wobei der erste Verschlüsseler ein erster Hardware-Verschlüsseler ist; und
wobei der zweite Verschlüsseler ein vom ersten Hardware-Verschlüsseler getrennter zweiter Hardware-Verschlüsseler ist.

10. Das Verfahren nach Anspruch 9, ferner umfassend:
Empfangen der verschlüsselten Daten von dem Speichermedium (280);
Entschlüsseln der verschlüsselten Daten als entschlüsselte Daten; und
Senden der entschlüsselten Daten.

11. Das Verfahren nach Anspruch 9 oder 10, ferner umfassend: Bestimmen eines Verschlüsselungsalgorithmus; und
Anwenden des Verschlüsselungsalgorithmus auf mindestens einen Teil der Daten.

12. Das Verfahren nach einem der Ansprüche 9 bis 11,
wobei das Verschlüsseln des mindestens einen Teils der Daten das Verschlüsseln des mindestens einen Teils der Daten unter Verwendung eines ersten Verschlüsselers umfasst;
wobei der mindestens eine Teil der Daten erste Daten sind;
wobei die verschlüsselten Daten erste verschlüsselte Daten sind; und
wobei das Verfahren ferner umfasst:
Empfangen zweiter Daten;
Verschlüsseln der zweiten Daten als zweite verschlüsselte Daten unter Verwendung eines zweiten Verschlüsselers; und
Speichern der zweiten verschlüsselten Daten auf einem Speichermedium (270).

13. Das Verfahren nach Anspruch 9, ferner umfassend:
Empfangen der verschlüsselten Daten von dem Speichermedium (270);
Entschlüsseln der verschlüsselten Daten als entschlüsselte Daten; und
Senden der entschlüsselten Daten.

## Revendications

1. Un dispositif (150) comprenant :
au moins un circuit comprenant un dispositif de chiffrement (320) et un dispositif de déchiffrement (322) ;
un support de mémoire (270) ; et
un support de stockage (280), dans lequel le dispositif de chiffrement (320) et le dispositif de déchiffrement (322) sont configurés entre le support de mémoire (270) et le support de stockage (280) ;
dans lequel le au moins un circuit est configuré pour effectuer une ou plusieurs opérations comprenant :
recevoir au moins une partie des données ;
chiffrer, à l'aide du dispositif de chiffrement (320), au moins une partie des données en tant que données chiffrées ; et
stocker, sur le support de stockage (280), des données chiffrées,
dans lequel le dispositif de chiffrement (320) est un premier dispositif de chiffrement ;
dans lequel les données cryptées sont des premières données cryptées ;
dans lequel le support de mémoire (270) est configuré pour recevoir des secondes données cryptées provenant d'un second cryptage ;
dans lequel le premier cryptage utilise un algorithme de cryptage différent de celui du second cryptage ;
dans lequel un algorithme de cryptage utilisé par le second cryptage comprend un schéma de cryptage léger qui minimise la latence ;
dans lequel un algorithme de chiffrement utilisé par le premier dispositif de chiffrement comprend un schéma de chiffrement plus puissant que l'algorithme utilisé par le deuxième dispositif de chiffrement ;
dans lequel le premier dispositif de chiffrement est un premier dispositif de chiffrement matériel ; et
dans lequel le deuxième dispositif de chiffrement est un deuxième dispositif de chiffrement matériel distinct du premier dispositif de chiffrement matériel.

2. Le dispositif (150) selon la revendication 1, dans lequel le au moins un circuit est en outre configuré pour effectuer une ou plusieurs opérations comprenant :
recevoir, à partir du support de stockage (280), des données cryptées ;
décrypter, à l'aide du dispositif de déchiffrement (322), des données cryptées en tant que données décryptées ; et
envoyer des données décryptées.

3. Le dispositif (150) selon la revendication 1 ou 2,
dans lequel le dispositif de chiffrement (320) est un premier dispositif de chiffrement ;
dans lequel le dispositif de déchiffrement (322) est un premier dispositif de déchiffrement ;
dans lequel au moins une partie des données est constituée de premières données ;
dans lequel le au moins un circuit comprend en outre un deuxième dispositif de chiffrement et un deuxième dispositif de déchiffrement ; et
dans lequel le au moins un circuit est en outre configuré pour effectuer une ou plusieurs opérations comprenant :
recevoir des deuxièmes données ;
chiffrer, à l'aide du deuxième dispositif de chiffrement, des deuxièmes données en tant que deuxièmes données chiffrées ; et
stocker, sur le support de mémoire (270), des deuxièmes données chiffrées.

4. Le dispositif (150) selon la revendication 1 ou 2,
dans lequel le au moins un circuit est en outre configuré pour effectuer une ou plusieurs opérations comprenant :
recevoir, à partir du support de mémoire (270), des secondes données cryptées ;
crypter, à l'aide du dispositif de chiffrement (320), des secondes données cryptées en tant que troisièmes données cryptées ; et
stocker, sur le support de stockage (280), des troisièmes données cryptées.

5. Le dispositif (150) selon la revendication 1,
dans lequel le au moins un circuit est en outre configuré pour effectuer une ou plusieurs opérations comprenant :
recevoir, à partir du support de mémoire (270), des données cryptées ;
décryptage des données cryptées, à l'aide du dispositif de déchiffrement (322), en tant que données décryptées ; et
envoyer des données décryptées.

6. Le dispositif (150) selon l'une des revendications 1 à 5,
dans lequel le au moins un circuit comprend en outre un module de configuration (420) ; et
dans lequel le au moins un circuit est en outre configuré pour effectuer une ou plusieurs opérations comprenant :
déterminer un algorithme de chiffrement pour le dispositif de chiffrement (320) et le dispositif de déchiffrement (322) ; et
appliquer l'algorithme de chiffrement à au moins une partie des données.

7. Le dispositif (150) selon la revendication 6,
dans lequel le au moins un circuit est en outre configuré pour effectuer une ou plusieurs opérations comprenant :
déterminer au moins une partie des données doit être cryptée ; et
activer le dispositif de chiffrement (320) pour crypter les données sur la base de la détermination qu'au moins une partie des données doit être cryptée.

8. Le dispositif (150) selon l'une des revendications 1 à 7, dans lequel recevoir au moins une partie des données comprend :
recevoir au moins une partie des données pendant au moins un vidage des données du cache ou un vidage de l'application depuis la mémoire du dispositif (150) vers le support de stockage (280).

9. Un procédé comprenant :
recevoir au moins une partie des données, ladite au moins une partie des données étant reçue sur la base d'au moins un vidage des données du cache et un vidage de l'application depuis la mémoire du dispositif (150) vers le support de stockage (280) ;
chiffrer la au moins une partie des données en tant que données chiffrées ; et
stocker, sur le support de stockage (280), des données chiffrées,
dans lequel le chiffrement de la au moins une partie des données comprend le chiffrement de la au moins une partie des données à l'aide d'un premier dispositif de chiffrement ;
dans lequel le support de mémoire (270) est configuré pour recevoir des secondes données chiffrées provenant d'un second dispositif de chiffrement ;
dans lequel le premier dispositif de chiffrement utilise un algorithme de chiffrement différent de celui du deuxième dispositif de chiffrement ;
dans lequel un algorithme de chiffrement utilisé par le deuxième dispositif de chiffrement comprend un schéma de chiffrement léger qui minimise la latence ;
dans lequel un algorithme de chiffrement utilisé par le premier dispositif de chiffrement comprend un schéma de chiffrement plus fort que l'algorithme utilisé par le deuxième dispositif de chiffrement ;
dans lequel le premier dispositif de chiffrement est un premier dispositif de chiffrement matériel ; et
dans lequel le deuxième dispositif de chiffrement est un deuxième dispositif de chiffrement matériel distinct du premier dispositif de chiffrement matériel.

10. Le procédé selon la revendication 9, comprenant en outre :
recevoir, à partir du support de stockage (280), des données cryptées ;
décrypter des données cryptées en tant que données décryptées ; et
envoyer des données décryptées.

11. Le procédé selon la revendication 9 ou 10, comprenant en outre :
déterminer un algorithme de chiffrement ; et
appliquer l'algorithme de chiffrement à au moins une partie des données.

12. Le procédé selon l'une des revendications 9 à 11,
dans lequel chiffrer au moins une partie des données comprend chiffrer au moins une partie des données à l'aide d'un premier dispositif de chiffrement ;
dans lequel la au moins une partie des données est une première donnée ;
dans lequel les données cryptées sont des premières données cryptées ; et
dans lequel le procédé comprend en outre :
recevoir des secondes données ;
crypter, à l'aide d'un second cryptage, des secondes données en tant que secondes données cryptées ; et
stocker, sur un support de mémoire (270), des secondes données cryptées.

13. Le procédé selon la revendication 9, comprenant en outre :
recevoir, à partir du support de mémoire (270), des données cryptées ;
décrypter des données cryptées en tant que données décryptées ; et
envoyer des données décryptées.
